# EUROPÄISCHE PATENTANMELDUNG

(11) **EP 0 700 845 A2**
(43) Veröffentlichungstag der Anmeldung: **13.03.1996**
(21) Anmeldenummer: 95250206.0
(22) Anmeldetag: 23.08.1995
(51) Int. Cl.: B65G 29/00, B65G 47/80

(54) **Vorrichtung zum Fördern von Werkstückträgern, Behältern, Transporteinheiten u.dgl.**

(30) Priorität: 12.09.1994 DE 4433395
(71) Anmelder: MANNESMANN Aktiengesellschaft, D-40213 Düsseldorf (DE)
(72) Erfinder: Nüssle, Gerhard, D-71263 Weil der Stadt (DE)
(74) Vertreter: Meissner, Peter E., Dipl.-Ing.

(57) **Zusammenfassung**

Die Erfindung betrifft eine Vorrichtung zur Übergabe von Fördergut (1) wie Werkstückträger, Behälter oder Transporteinheiten (1a) von einer Förderstrecke (2) auf einen angrenzenden Förderer mit einem drehangetriebenen Schleppteller (3) mittels einer Weiche (7,8,11).
Erfindungsgemäß weist der Förderer mit dem Schleppteller (3) eine zum Schleppteller konzentrische Außenführung (6) auf. Das Fördergut wird radial außen an der Außenführung geführt und radial innen von einer Antriebsfläche (3a) an dem Schleppteller.
Die Weiche weist ein heb-und senkbares Kreissegment (7) auf, über das das Fördergut nach Senken einer Seitenführung (11) zum Förderer mit dem Schleppteller und der Außenführung geleitet wird. Schließlich weist die Weiche noch ein zweites heb-und senkbares Kreissegment (7) auf, das im angehobenen Zustand das Fördergut vom Schleppteller (3) und der Außenführung (6) auf die Förderstrecke (2) leitet.

## Beschreibung

Die Erfindung betrifft eine Vorrichtung zur Übergabe von Fördergut wie Werkstückträger, Behälter oder Transporteinheiten von einer Förderstrecke auf einen angrenzenden Förderer mit einem drehangetriebenen Schleppteller mittels einer Weiche gemäß dem Oberbegriff des Anspruches 1.

Eine derartige Fördervorrichtung ist bekannt (WO 92/21 594 A1). Die bekannte Bauweise strebt an, die Entnahme von auf der Lastförderfläche angeordneten Werkstücken kontinuierlich, deutlich einfacher und mit geringem technischen Aufwand vorzunehmen. Dazu ist vorgesehen, daß eine Ausschleuseinrichtung einen in die Lastförderfläche des Fördergutes hineinragenden Drehteller sowie mindestens eine Weiche aufweist, durch welche die Werkstücke von der Lastförderfläche auf den Drehteller oder zurückgelangen.

Hierbei ist die Förderstrecke unterbrochen und es ergeben sich lange Taktzeiten bei der Umstellung von Einschleusvorgängen auf Ausschleusvorgänge oder umgekehrt.

Des weiteren ist aus der DE 38 30 009 A1 eine Förderanlage für zu füllende und zu verschließende Verpackungsbehälter bekannt. Die Förderanlage besteht im wesentlichen aus einer Hauptfördereinrichtung und seitlich daneben angeordneten Bearbeitungsvorrichtungen mit einer ringförmigen Förderstrecke. Die Übergabe der Verpackungsbehälter von der Hauptförderstrecke auf die Ring-Förderstrecke erfolgt quer zur Förderrichtung der Hauptförderstrecke über einen Abschieber.

Ferner ist in der US 1,576,429 eine Übergabevorrichtung für Dosen beschrieben. Die Übergabevorrichtung verbindet eine gerade Zuförderstrecke mit einer spiralförmigen Förderstrecke in einer Kühlanlage. Die Spiral-Förderstrecke ist oberhalb der Zuförderstrecke angeordnet. Die Übergabevorrichtung besteht aus mehreren Aufnahmegondeln für die Dosen, die karussellartig an einer Scheibe angeordnet sind. Die Scheibe ist um eine aus der Vertikalen heraus geneigten Achse drehbar, so daß von der Zuförderstrecke über eine Führung in die Gondel eingeschobene Dosen durch die Drehbewegung der Scheibe auf das Niveau des Spiral-Förderers angehoben werden und dort von einem weiteren Abweiser auf den Spiral-Förderer geleitet werden.

Der vorliegenden Erfindung liegt die Aufgabe zugrunde, eine Vorrichtung zum Fördern von Fördergut wie Werkstückträger, Behälter oder Transporteinheiten mit einer Förderstrecke und einem dazu beabstandeten Schleppteller so zu schaffen, daß selbst beim häufigen Richtungswechsel des Förderguts von der Förderstrecke zur Schleppscheibe und umgekehrt eine kurze Taktzeit ermöglicht wird.

Die gestellte Aufgabe wird durch die Merkmale des Anspruchs 1 gelöst.

Da die Aussenführung erfindungsgemäß unterbrochen und als Weiche ausgebildet ist, ist keine Unterbrechung des geraden Förderstranges erforderlich. Durch eine gleichzeitige Betätigung aller heb- und senkbaren Elemente kann eine schnelle Bildung eines Einlaufs oder Auslaufs erfolgen, so daß die Taktzeiten gegenüber der bekannten Gestaltung reduziert werden.

Eine Weiterbildung der Erfindung besteht darin, daß die am Umfang des Schlepptellers vorgesehene Antriebsfläche aus einer horizontalen Ringfläche des Schlepptellers gebildet ist.

Die Unterbringung der heb- und senkbaren Kreissegmente wird ferner dadurch begünstigt, daß die gerade Förderstrecke aus zwei parallel verlaufenden, im Abstand der Breite des Fördergutes angeordneten Transportstreckenholme gebildet ist, die jeweils ein strangförmiges Transportmittel, wie z.B. einen Transportgurt oder eine Transportkette enthalten.

Eine verbesserte Führung des Fördergutes wird dadurch erzielt, daß das Fördergut auf der Seite der Außenführung mit Eckrollen versehen ist, die in ringförmige Laufflächen der konzentrischen Außenführung radial gestützt sind.

Die vorstehende Ausgestaltung kann außerdem alternativ dahingehend ausgeführt sein, daß das Fördergut auf der Seite der Außenführung mit Eckrollen versehen ist, die auf einer ringförmigen, horizontal an der konzentrischen Außenführung angebrachten Lauffläche aufgestützt sind.

Die Breite des Fördergutes, die durch das Antriebssystem des Schlepptellers vorgegeben wird, findet ihre Anpassung auf der geraden Förderstrecke dadurch, daß das den Einlauf zum Schleppteller bildende, heb- und senkbare Kreissegment, an den Enden jeweils schwenkbar gelagerte Klappstücke aufweist, die in hochgefahrener Position des Kreissegments auf den beidseitig angeordneten Transportstreckenholmen der geraden Förderstrecke aufliegen. Dadurch wird an dem Einlauf eine Abdeckung des Förderstranges geschaffen, so daß während des Einlaufens keine Transportkräfte in Förderrichtung übertragen werden. Außerdem entsteht dadurch eine Führung.

Die Weiterbildung wird dabei dahingehend vorgenommen, daß die ausgeschwenkten Klappstücke und das hochgefahrene Kreissegment auf den beidseitigen Transportstreckenholmen der geraden Förderstrecke eine Horizontale bilden.

Eine günstige Raumausnutzung zur Unterbringung des erforderlichen Antriebs wird dadurch erzielt, daß die heb- und senkbare, gerade Seitenführung mittels einer neben dem Transportstreckenholm der geraden Förderstrecke angeordneten Kolben-Zylinder-Einheit betätigbar ist.

Vorteilhaft ist außerdem, daß das den Auslauf aus dem Schleppteller bildende, heb- und senkbare Kreissegment nur an der dem Schleppteller zugewandten Seite mit einem schwenkbaren Klappstück versehen ist. An der gegenüberliegenden Seite kann ein Klappstück erspart werden, ohne an Führungsqualität einzubüßen.

Eine andere Weiterbildung der Erfindung besteht darin, daß das den Einlauf in den Schleppteller bildende Kreissegment mittels außen angeordneten Führungselementen und mittels einer mittig zwischen den Führungselementen angeordneten Kolben-Zylinder-Einheit höhenverstellbar ist. Zum einen wird durch die Parallelanordnung von Antriebssträngen der Innenraum zwischen den Antriebssträngen freigehalten und zum anderen kann das Weichenstück im Innenraum gelagert, geführt und angetrieben werden.

Ein Ausführungsbeispiel der Erfindung ist in der Zeichnung dargestellt und wird im folgenden näher beschreiben. Es zeigen:
- Fig. 1: eine Draufsicht auf eine gerade Förderstrecke mit Schleppteller,

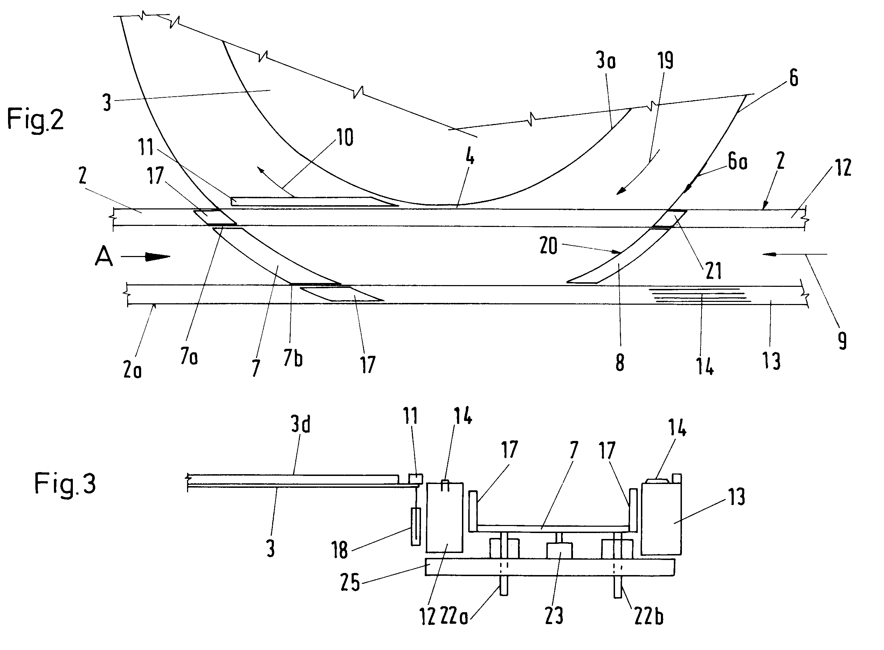

- Fig. 2: einen vergrößerten Ausschnitt aus Fig. 1, ohne Fördergut gezeichnet und
- Fig. 3: einen Querschnitt durch die gerade Förderstecke mit einem Teil des Schlepptellers in Richtung A gemäß Fig. 2 gesehen.

Die Vorrichtung dient zur Förderung von Fördergut 1, das aus einem Werkstückträger 1a, einem Behälter oder aus einer stückgutartigen Transporteinheit besteht.

Das Fördergut 1 wird auf einer geraden Förderstrecke 2 (Transferstrecke) in einer beliebigen Förderrichtung transportiert. Der Verlauf 2a der geraden Förderstrecke 2 führt an einem drehangetriebenen Schleppteller 3 mit einem Abstand 4 vorbei, der lediglich Spaltabstand beträgt. Jedoch ragt der Schleppteller keinesfalls in die Förderstrecke 1 hinein. Das Fördergut 1 wird mittels einer gesondert zu beschreibenden Weiche in den Schleppteller 3 eingeschleust und von dem Schleppteller 3 zurück auf die gerade Förderstrecke 1 ausgeschleust.

Da der Schleppteller 3 an seinem Umfang 3a mit einem Abstand 4 außerhalb und seitlich neben der geraden Förderstecke 2 angeordnet ist, besitzt er eine am Umfang 3a vorgesehene Antriebsfläche 3b. Der Abstand 4 ist so gewählt, daß eine unbehinderte Drehung der Schleppteller 3 möglich ist und die Übergabe des Förderguts 1 ohne zusätzliche Zwischenförderer erfolgt. Ferner ist eine in der Breite 5 dem Fördergut 1 angepaßte, zum Schleppteller 3 konzentrische Außenführung 6 vorgesehen, in deren Verlauf 6a innerhalb der Breite 5 der geraden Förderstrecke 2 zwei die Breite 26 der geraden Förderstrecke 2 überbrückende, durch Heben oder Senken verschließende oder öffnende Kreissegmente 7 bzw. 8 vorgesehen sind. Hingegen ist im Verlauf 2a der geraden Förderstrecke 2 in Förderrichtung 9 tangential an den Schlepptellerumfang 3a angelegt eine den Einlauf 10 zum Schleppteller 3 durch Heben oder Senken verschließende oder öffnende gerade Seitenführung 11 vorgesehen. Hiebei kann die am Umfang 3a des Schlepptellers 3 vorgesehene Antriebsfläche 3b aus einer horizontalen Ringfläche 3c des Schlepptellers 3 bestehen, wobei eine Innenführungsplatte 3d konzentrisch aufgelegt ist, um eine Führung zu bilden.

Die gerade Förderstrecke 2 ist aus zwei parallelverlaufenden, im Abstand der Breite 5 des Fördergutes 1 angeordneten Transportstreckenholme 12 und 13 gebildet, in denen jeweils ein strangförmiges Transportmittel, wie z.B. ein Transportgurt 14, eine Transportkette u.dgl., geführt und angetrieben sind.

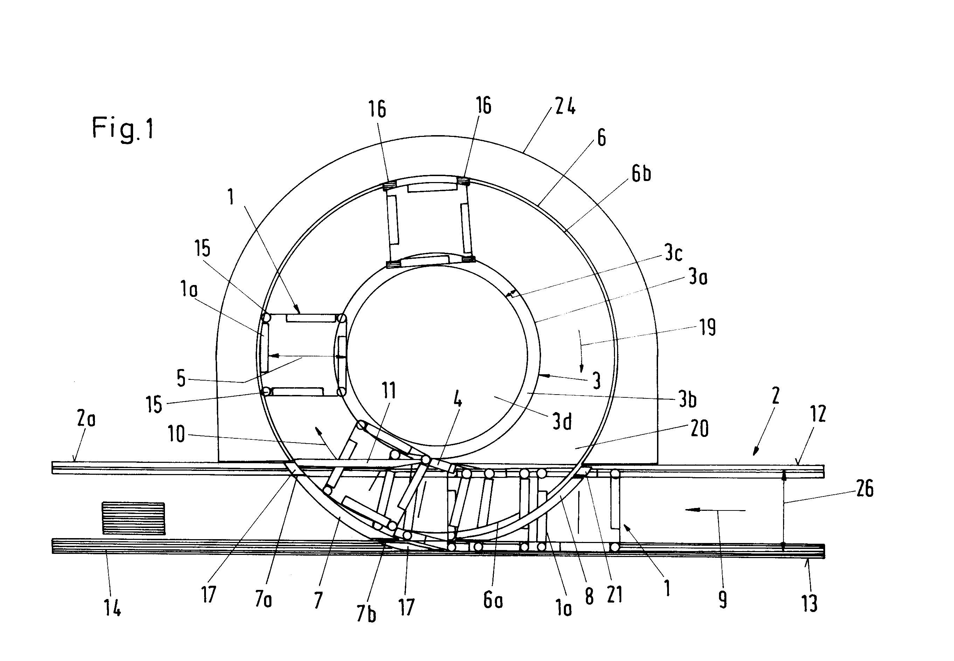

Das Fördergut 1 auf dem Schleppteller 3 ist ferner mit Eckrollen 15 versehen, die der Antriebsfläche 3b gegenüberliegen und in ringförmigen Laufflächen 6b der konzentrischen Außenführung 6 radial gestützt sind. Alternativ ist hierzu vorgesehen, daß das Fördergut 1 auf dem Schleppteller 3, der Antriebsfläche 3b gegenüberliegend, mit vertikal angeordneten Eckrollen 16 versehen ist, die auf einer ringförmigen, horizontal an der konzentrischen Außenführung 6 angebrachten Lauffläche aufgestützt sind (in Fig. 1 nur angedeutet).

Das den Einlauf 10 zum Schleppteller 3 bildende, heb- und senkbare Kreissegment 7 weist an den Enden 7a bzw. 7b jeweils schwenkbar gelagerte erste Klappstücke 17 auf, die in hochgefahrener Position des Kreissegments 7 auf den beidseitig angeordneten Transportstreckenholmen 12 bzw. 13 der geraden Förderstrecke 2 aufliegen. Die ausgeschwenkten Klappstücke 17 und das hochgefahrene Kreissegment 7 bilden auf den beidseitigen Transportstreckenholmen 12 und 13 der geraden Förderstrecke 2 eine Horizontale.

Die heb- und senkbare gerade Seitenführung 11 ist mittels einer neben dem Transportstreckenholm 12 der geraden Förderstrecke 2 angeordneten Kolben-Zylinder-Einheit 18 betätigbar. Das den Auslauf 19 aus dem Schleppteller 3 bildende, heb- und senkbare Kreissegment 8 ist nur an der dem Schleppteller 3 zugewandten Seite 20 mit einem schwenkbaren Klappstück 21 versehen. Das den Einlauf 10 in den Schleppteller 3 bildende Kreissegment 8 ist mittels außen angeordneten Führungselementen 22a und 22b und mittels einer mittig zwischen den Führungselementen 22a bzw. 22b angeordneten Kolben-Zylinder-Einheit 23 höhenverstellbar.

Die Führungselemente 22a, 22b sowie die Kolben-Zylinder-Einheit 23 sind auf einer Anbautraverse 25 gelagert. Der Schleppteller 3 kann außerdem von einer Abdeckung 24 eingehaust sein. Der Schleppteller 3 bildet hierbei, wie bereits ausgeführt, einen Speicher für Werkstückträger 1a, Behälter, Transporteinheiten u.dgl. oder aber auch mit entsprechenden Ausnehmungen der Abdeckung 24 die Möglichkeit für Arbeitsplätze.

Die Funktionsweise der Vorrichtung ist wie folgt:

Beim Einlauf in den Schleppteller 3 wird das Fördergut 1 von der geraden Förderstrecke 2 bei angehobenem Kreissegment 7 und abgesenkter gerader Seitenführung 11 auf den Schleppteller 3 gelenkt und damit in dem dortigen Kreisverkehr weitertransportiert. Darauf wird das Kreissegment 7 abgesenkt und die gerade Seitenführung wieder angehoben.

Bei Auslauf des Fördergutes 1 aus dem Schleppteller 3 wird das Kreissegment 8 angehoben, das Fördergut 1 gelangt somit auf den Schleppteller 3 und wird damit angetrieben und wird aus dem Schleppteller 3 auf die gerade Förderstrecke 2, d.h. die Transferstrecke transportiert und von dieser zwischen den Transportstreckenholmen 12 bzw. 13 gelenkt von der geraden Seitenführung übernommen. Darauf folgt wiederum das Absenken der Außenführung 8 in die Grundstellung.

## Patentansprüche

1. Vorrichtung zur Übergabe von Fördergut (1) wie Werkstückträger, Behälter oder Transporteinheiten (1a) von einer Förderstrecke (2) auf einen angrenzenden Förderer mit einem drehangetriebenen Schleppteller (3) mittels einer Weiche (7, 8, 11), die das Fördergut (1) von der Förderstrecke (2) auf den Förderer mit dem Schleppteller (3) oder zurück vom dem Förderer mit dem Schleppteller (3) auf die Förderstrecke (2) leitet,
dadurch gekennzeichnet,
daß der Förderer mit dem Schleppteller (3) eine zum Schleppteller (3) konzentrischen Außenführung (6) aufweist,
daß das Fördergut (1) im Bereich des Förderers mit dem Schleppteller (3) radial außen an der Außenführung (6) geführt und radial innen von einer Antriebsfläche (3a) an dem Schleppteller (3) geführt und angetrieben wird,
daß der Schleppteller (3) neben der Förderstrecke (2) angeordnet ist,
daß die Weiche ein erstes heb- und senkbares Kreissegment (7) aufweist, über das das Fördergut (1) nach Senken einer Seitenführung (11) zum Förderer mit dem Schleppteller (3) und der Außenführung (6) leitet und
daß die Weiche ein zweites, heb- und senkbares Kreissegment (7) aufweist, das im angehobenen Zustand das Fördergut (1) vom Schleppteller (3) und der Außenführung (6) auf die Förderstrecke (2) leitet.

2. Vorrichtung nach Anspruch 1,
dadurch gekennzeichnet,
daß die Antriebsfläche (3b) aus einer horizontalen Ringfläche (3c) des Schlepptellers (3) besteht.

3. Vorrichtung nach einem der Ansprüche 1 oder 2,
dadurch gekennzeichnet,
daß die insbesondere gerade Förderstrecke (2) aus zwei parallel verlaufenden, im Abstand der Breite (5) des Fördergutes (1) angeordneten Transportstreckenholmen (12,13) gebildet ist, die jeweils ein strangförmiges Transportmittel, wie z.B. einen Transportgurt (14) oder eine Transportkette enthalten.

4. Vorrichtung nach einem der Ansprüche 1 bis 3,
dadurch gekennzeichnet,
daß das Fördergut (1) auf der Seite der Außenführung mit Eckrollen (15) versehen ist, die in ringförmige Laufflächen (6b) der konzentrischen Außenführung (6) radial gestützt sind.

5. Vorrichtung nach einem der Ansprüche 1 bis 3,
dadurch gekennzeichnet,
daß das Fördergut (1) auf der Seite der Außenführung (6) mit Eckrollen (16) versehen ist, die auf einer ringförmigen, horizontal an der konzentrischen Außenführung (6) angebrachten Lauffläche aufgestützt sind.

6. Vorrichtung nach einem der Ansprüche 3 bis 5,
dadurch gekennzeichnet,
daß das den Einlauf (10) zum Schleppteller (3) bildende, heb- und senkbare Kreissegment (7), an den Enden (7a,7b) jeweils schwenkbar gelagerte Klappstücke (17) aufweist, die in hochgefahrener Position des Kreissegments (7) auf den beidseitig angeordneten Transportstreckenholmen (12,13) der Förderstrecke (2) aufliegen.

7. Vorrichtung nach einem der Ansprüche 3 bis 6,
dadurch gekennzichnet,
daß die ausgeschwenkten Klappstücke (17) und das hochgefahrene Kreissegment (7) auf den beidseitigen Transportstreckenholmen (12,13) der Förderstrecke (2) eine Horizontale bilden.

8. Vorrichtung nach einem der Ansprüche 3 bis 7,
dadurch gekennzeichnet,
daß die heb- und senkbare, gerade Seitenführung (11) mittels einer neben dem Transportstreckenholm (12) der geraden Förderstrecke (2) angeordneten Kolben-Zylinder-Einheit (18) betätigbar ist.

9. Vorrichtung nach einem der Ansprüche 1 bis 8,
dadurch gekennzeichnet,
daß das den Auslauf (19) aus dem Schleppteller (3) bildende, heb- und senkbare Kreissegment (8) nur an der dem Schleppteller (3) zugewandten Seite (20) mit einem schwenkbaren Klappstück (21) versehen ist.

10. Vorrichtung nach einem der Ansprüche 1 bis 9,
dadurch gekennzeichnet,
daß das den Einlauf (10) in den Schleppteller (3) bildende Kreissegment (7) mittels außen angeordneten Führungselementen (22a,22b) und mittels einer mittig zwischen den Führungselementen (22a,22b) angeordneten Kolben-Zylinder-Einheit (23) höhenverstellbar ist.
